# EUROPEAN PATENT APPLICATION

(11) **EP 1 587 308 A1**
(43) Date of publication of application: **19.10.2005**
(21) Application number: 05103006.2
(22) Date of filing: 15.04.2005
(51) Int. Cl.: H04N 5/232, G03B 17/20

(54) **Portable Terminal Device**

(30) Priority: 15.04.2004 JP 2004120475
(71) Applicant: NEC CORPORATION, Tokyo (JP)
(72) Inventor: Daita, Rie, Tokyo (JP)
(74) Representative: Betten & Resch

(57) **Abstract**

A portable terminal device with a built-in camera, wherein at least one of a camera shake prevention icon and a camera shake prevention message is displayed from when the shutter is depressed to when the shot image is acquired, when the shooting with camera is carried out in a shooting mode other than the video shooting mode.

## Description

This application claims priority to prior Japanese patent application JP 2004-120475, the disclosure of which is incorporated herein by reference.

### Background of the Invention

The present invention relates to a portable terminal device, in particular, a portable terminal device with a built-in camera, having a camera shake user interface for displaying a message to a user in order to prevent camera shake.

Presently, a majority of mobile telephones, which are mobile communication terminals, have a camera function. However, depending on the camera module loaded in the mobile telephone, shooting time can lag due to a delay in the processing time. When the mobile telephone is moved or the like while the shutter is depressed, a photo is taken by the user of an unintended place, resulting in the problem that a photo can not accurately be taken of the target object.

As an example of a conventional technique, there is an electronic still camera which displays the remaining time before the completion of exposure at the time of shooting under a slow shutter with a camera shake mark and/or the text message, "Be careful of camera shake", on an image display LCD. This digital still camera according to conventional techniques, as disclosed in patent document 1 (refer to Japanese Laid-Open Patent Publication No. 2002-335427), has functions to calculate the remaining time to the completion of exposure after the shutter button is depressed, in shooting under a slow shutter whose exposure time is 1 second to several seconds, and to display the calculated remaining time in a count-down way on the display screen as well as a mark A for alerting to camera shake on the display screen.

When shooting with camera is carried out, the timing when the shot image is loaded after the shutter key is depressed (shutter response) depends on a loaded camera module. With respect to the camera module in which the shot image capture timing is delayed, there is a concern that the image captured when the shutter is depressed differs from the actually acquired image.

On the other hand, the invention described in the above-mentioned patent document 1 is intended for camera shake that occurs until the exposure completes at the time of shooting under a slow shutter but not intended for alerts to camera shake depending on the shooting mode which delays the shot image capture timing at the time of performing shooting with camera.

### Summary of the Invention

It is an object of the present invention to provide a portable terminal device in which a user can be conscious of camera shake every time doing the shooting by displaying a message to the user in order to prevent camera shake.

According to the invention of a first aspect, there is provided a portable terminal device with a built-in camera including a control unit for controlling processing from viewing with the camera to shooting, wherein the control unit controls so as to display at least one of a camera shake prevention icon and a camera shake prevention message on the screen from when the shutter is depressed to when the shot image is acquired, when shooting with camera is carried out in a shooting mode other than the video shooting mode.

Preferably, the control unit controls so as to display a message for alerting to camera shake on the screen during start-up when the camera starts up.

Preferably, a message for alerting to camera shake is displayed on the screen when a shooting environment setting function is chosen by a user's operation and when the setting value of the shooting environment setting function corresponds to the setting value of the shooting environment in which the image capture frame rate is slow.

Preferably, a screen is directly shifted to the normal finder screen when a corresponding menu is not chosen by a user or when the setting value of the shooting environment setting function is other than the setting value of the shooting environment setting which corresponds to the setting value in which the image acquisition frame rate is slow.

Preferably, the camera shake prevention icon and the camera shake prevention message are in non-display on the screen when the video shooting mode is set.

Preferably, the camera shake prevention message is bilingually displayed on the screen, when a bilingual function is set.

According to the invention of a second aspect, the portable terminal device with a built-in camera further includes a user interface for blacking out the entire finder screen from when the shutter is depressed to when the shot image is loaded.

### Brief Description of the Drawings

FIG. 1 is a block diagram showing the internal configuration of a mobile telephone according to an embodiment of the present invention.
Fig. 2 is a flowchart showing the processing at the time of the camera shooting action for a mobile phone according to an embodiment of the present invention.
Fig. 3 is a diagram showing an example of the display screen at the time of the camera shooting action.
Fig. 4 is a diagram showing an example of the transition of the display screen at the time of the camera shooting action.

### Description of the Preferred Embodiments

The present invention contains a user interface for improving the suppression of camera shake at the time of shooting in the digital camera function of a mobile telephone. This interface displays a message for alerting to camera shake to a user using the camera function at the time of starting up the camera, and in particular, displays a message so that camera shake does not occur on the selected scene of the shooting environment, in the situation where camera shake can easily occur. Also, from when the shutter is depressed to when the shot image is acquired, a user is made conscious of camera shake occurring by displaying a shake prevention icon and/or a shake prevention message.

Herein below, the embodiment of the portable terminal device according to the present invention is explained in detail.

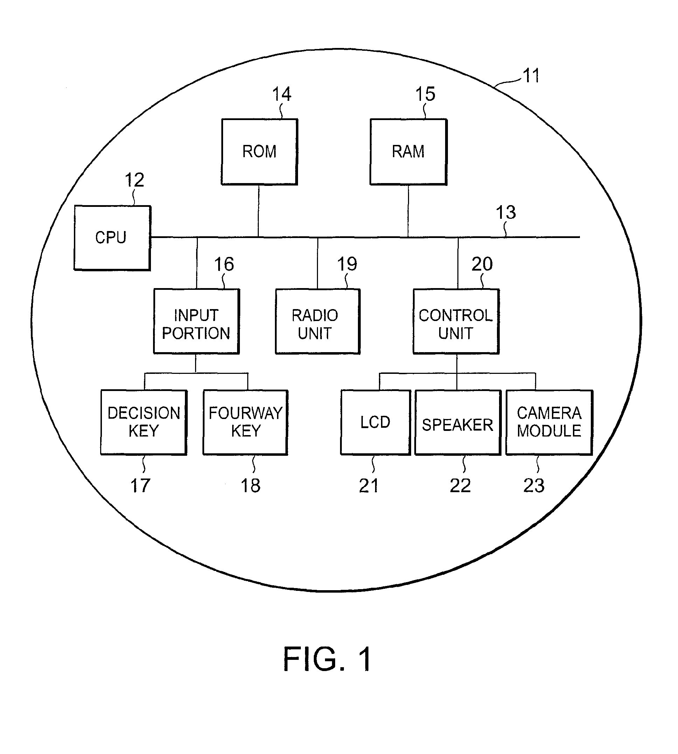

In order to explain the present embodiment, a mobile telephone is cited as a portable terminal device. Fig. 1 shows the principal parts of the circuit configuration of a mobile telephone 11. As shown in Fig. 1, the mobile telephone 11 contains a CPU (central processing unit) 12, a bus 13, a ROM 14, a RAM 15, an input portion 16, a decision key 17, a four-way key 18, a radio unit 19, a control unit 20, an LCD 21, a speaker 22, and a computer module 23.

The CPU 12 is connected to each part in the device via the bus 13. Of these, the ROM 14 is a read only memory which stores various kinds of control programs for running the CPU 12 and fixed data such as the shutter sound and various display data at the time of shooting with camera.

The RAM 15 contains a RAM (random access memory) storing data temporarily required when the CPU 12 runs programs. In the present invention, image data mainly shot with a camera is temporarily stored.

The input portion 16 is a circuit detecting key input from various keys including the decision (shutter) key 17, the four-way key 18, and the like.

The radio unit 19 transmits and receives radio waves. The control unit 20 carries out transmission control of the sound processing and the like of radio signals as well as memory management and the like thereof. The LCD 21 is controlled by the control unit 20, and displays data stored in the camera finder and the above-mentioned RAM 15. The speaker 22 makes the shutter tone stored in the ROM 14 to sound.

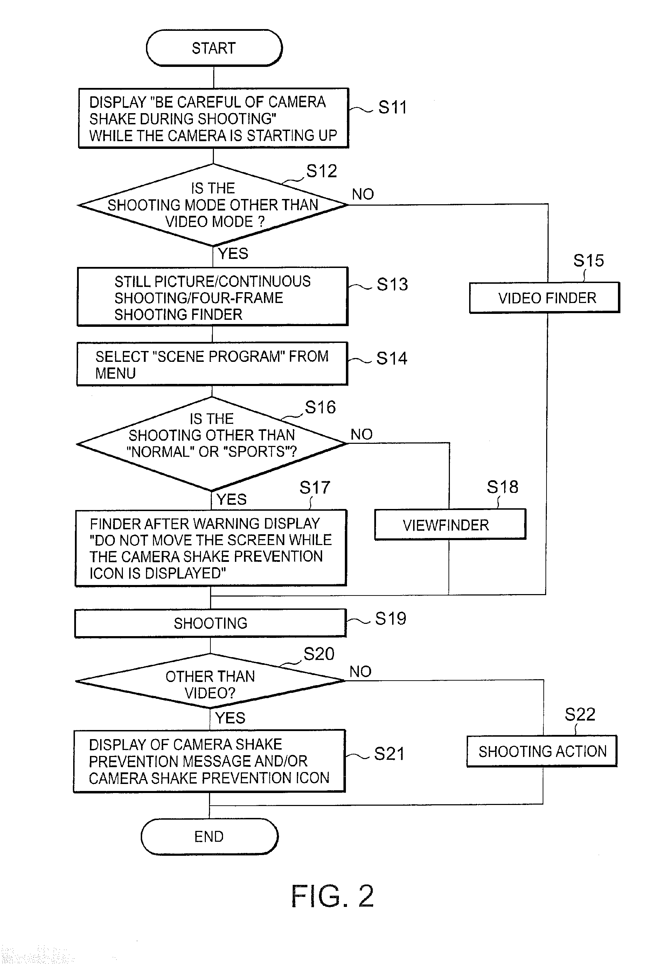

Fig. 2 is a flowchart showing the processing operation from viewing with the camera to shooting. Herein below, the operation in the present embodiment is explained. A control program is stored in the ROM 14. The CPU 12 retrieves this control program from the ROM 14 and runs this program with each part controlled.

When a user of the mobile telephone 11 starts up a camera, a camera start-up screen is displayed at the time of start-up. At this time, a message such as "Don't move during shooting" for alerting to camera shake (not illustrated) may be displayed on the start-up screen (step S11).

After this, when the shooting mode selected by the user is other than video shooting (YES in step S12), the finder screen shifts to the respective finder screen of still image shooting mode, continuous shooting mode, four-frame shooting mode, or video shooting mode. The finder screens other than the video finder screen in the video shooting mode are all the same (step S13).

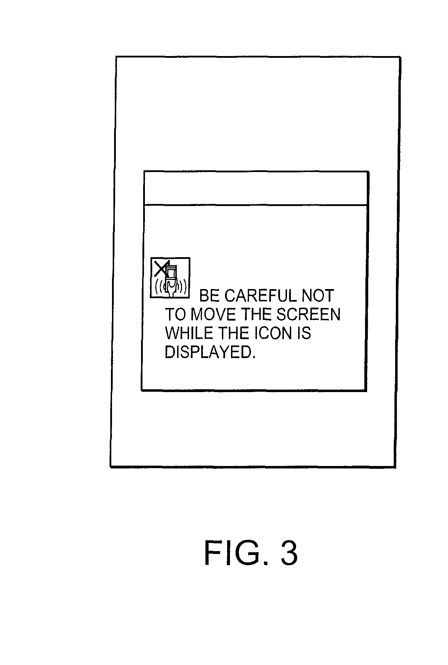

Next, a "scene program" (a function to set the shooting environment) is chosen from the menu by a user operation (step S14). When the setting value of the scene program is the setting value of the shooting environment corresponding to the setting value in which the image capture frame rate such as a "portrait", "landscape", "night scene", or "night scene and a portrait" (YES in step S16) is slow, that is, when the setting value is other than "normal" or "sports", an alerting message as shown in Fig. 3, "Don't move while the camera shake prevention icon is displayed" is displayed (step S17).

When the corresponding menu is not chosen or when the setting value of the "scene program" is the setting value other than the setting value of a "portrait", "landscape", "night scene", or "night scene and a portrait" (NO in step S16), the finder screen shifts to the normal finder screen (step S18).

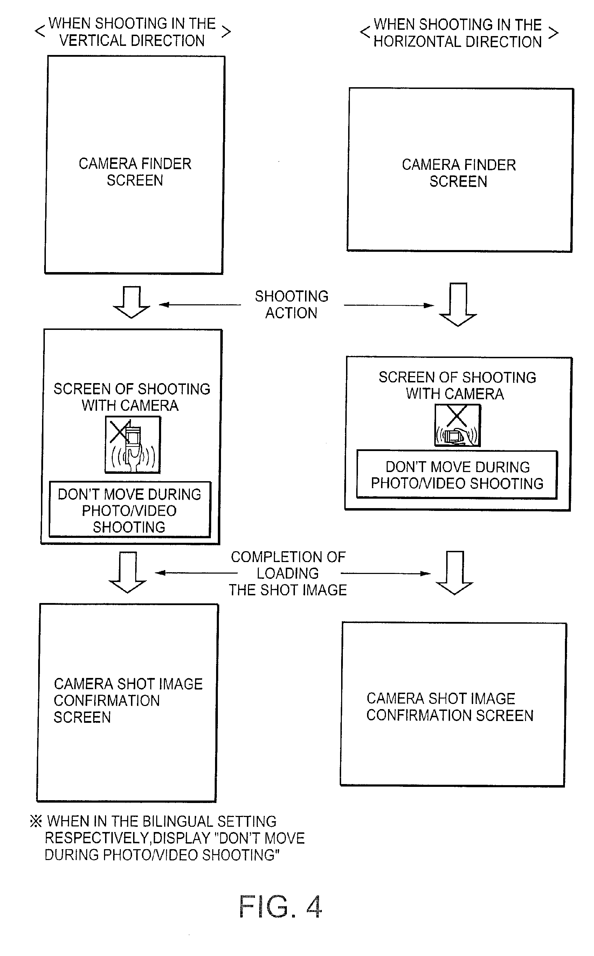

When shooting with camera is carried out by a user depressing the shutter (step S19), when the shooting mode is other than video (YES in step S20), a camera shake prevention icon and a camera shake prevention message as shown in Fig. 4, are displayed in all of the above-mentioned modes, from when the shutter is depressed to when the shot image is acquired, (step S21).

When shooting a video (NO in step S20), it is not necessary to display the camera shake prevention icon and the camera shake prevention message. Therefore, those are in non-display and a user can directly shift to the shooting action (step S22)

When the embodiment is set as bilingual by the transfer device, a bilingual display such as "Don't move during photo/video shooting" is Japanese/English compliant.

As explained above, according to the embodiment of the present invention, there is an effect that a user can be conscious of camera shake every time shooting with camera without making conscious consideration for camera shake, by seeing a camera shake prevention message or icon at the time of shooting with camera.

Also, when a camera is started up or when a shooting environment in which camera shake occurs easily is chosen by the shooting environment setting, display of an additional message for alerting to camera shake can provide a user with an effect of the present invention without being conscious of camera shake.

The above-mentioned embodiment has explained such a case in which the shooting with camera is done by a mobile telephone. However, other portable terminal devices such as a PHS and the like in which camera modules are loaded can be applied to the present invention.

Also, during shooting (from when the shutter is depressed to when the shot image is loaded), it is possible to provide a user interface that does not make a user aware of camera shake by blacking out the entire finder screen.

As above, the embodiment of the present invention has been explained. However, without being limited to the above-mentioned embodiment, various types of modification are possible within a scope which does not deviate from the gist.

According to the present invention, there is an effect that a user can be conscious of camera shake every time of the shooting is done without making conscious consideration for camera shake by seeing a camera shake prevention message or icon at the time of shooting with camera.

Also, when the camera is started up or when a shooting environment in which camera shake occurs easily is chosen by the shooting environment setting, display of an message for alerting to camera shake can provide a user with an effect of the present invention without being conscious of camera shake.

## Claims

1. A portable terminal device with a built-in camera, comprising a control unit for controlling processing from viewing with the camera to shooting, wherein:
the control unit controls so as to display at least one of a camera shake prevention icon and a camera shake prevention message on the screen from when the shutter is depressed to when the shot image is acquired, when shooting with camera is carried out in a shooting mode other than the video shooting mode.

2. The portable terminal device according to Claim 1, wherein:
the control unit controls so as to display a message for alerting to camera shake on the screen during start-up when the camera starts up.

3. The portable terminal device according to Claim 1 or 2, wherein:
a message for alerting to camera shake is displayed on the screen when a shooting environment setting function is chosen by a user's operation and when the setting value of the shooting environment setting function corresponds to the setting value of the shooting environment in which the image capture frame rate is slow.

4. The portable terminal device according to Claim 3, wherein:
a screen is directly shifted to the normal finder screen when a corresponding menu is not chosen by a user or when the setting value of the shooting environment setting function is other than the setting value of the shooting environment setting which corresponds to the setting value in which the image acquisition frame rate is slow.

5. The portable terminal device according to any of the preceding claims, wherein:
the camera shake prevention icon and the camera shake prevention message are in non-display on the screen when the video shooting mode is set.

6. The portable terminal device according to any of the preceding claims, wherein:
the camera shake prevention message is bilingually displayed on the screen, when a bilingual function is set.

7. The portable terminal device according to any of the preceding claims, further comprising:
a user interface for blacking out the entire finder screen from when the shutter is pressed to when the shot image is loaded.
